# EUROPEAN PATENT SPECIFICATION

(11) **EP 0 626 246 B1**
(45) Date of publication and mention of the grant of the patent: **26.03.1997**
(21) Application number: 94303682.2
(22) Date of filing: 23.05.1994
(51) Int. Cl.: B29C 47/06, B29C 47/28

(54) **Extrusion head for multilayer parisons of unstable material combinations**
Extrusionskopf für Mehrschichtvorformlinge aus instabilen Materialkombinationen
Tête d'extrusion pour paraisons multicouches en combinaisons de matériaux instables

(30) Priority: 25.05.1993 US 66804
(43) Date of publication of application: 30.11.1994
(73) Proprietor: GENERAL ELECTRIC COMPANY, Schenectady, NY 12345 (US)
(72) Inventor: Coyle, Dennis Joseph, Penfield, New York 14526 (US); Teutsch, Erich Otto, Richmond, Massachusetts 01254 (US)
(74) Representative: Szary, Anne Catherine, Dr.

(56) References cited:
- US-A- 4 182 603
- US-A- 4 798 526
- US-A- 5 069 612
- PATENT ABSTRACTS OF JAPAN vol. 13, no. 318 (M-852) 19 July 1989 & JP-A-11 003 421 (TOMY KIKAI KOGYO) 20 April 1989

## Description

This invention relates to resin extrusion apparatus and particularly to extrusion heads for producing tubular articles such as parisons.

Parisons, tubular extrusions of resin and plastic which are subsequently blow molded to form bottles, are formed in the prior art by various apparatus, some including extrusion heads which extrude successive layers of plastic resin onto a mandrel. Such devices must be of a size which allows insertion into a blow molding apparatus for bottles. A typical multilayer parison extrusion head has separate inlets for receiving heated and plasticized resin from individual screw heaters and extruders and has separate channels for distributing and expressing the respective plastic resins in successive layers on the mandrel. Each channel includes an annular equalization and distribution chamber surrounding and spaced from the mandrel for receiving the plastic resin from the corresponding inlet. From the equalization chamber, the plastic resin is fed through a frustoconical transfer passage downward and inward into a tubular extrusion channel formed around the mandrel. This annular extrusion channel exits through an inwardly or outwardly flaring annular die, which includes a conical core member which may be moved longitudinally relative to the outer member of the die to vary the thickness of the wall of the extruded tubular article.

One particularly useful and successful extrusion head for forming tubular articles, such as parisons, is disclosed in U.S. Patent No. 4,798,526. This head includes one or more individual annular extrusion modules surrounding respective successive portions of a step or tapered mandrel to form the annular extrusion channel, which receives one or more successively extruded plastic resin layers from the modules. Each module has a pair of members with mating surfaces, wherein the equalization and distribution chamber and frustoconical transfer passage are formed. The die modules are separated from each other by annular air spaces to prevent heat transfer that can degrade low temperature resins.

While the prior art apparatus is generally efficient and effective in the extrusion of multilayer parisons, improvements are desired.

Conventional extrusion heads have considerable annular flow lengths for the multilayer structure, with annular flow lengths as long as 7.62cm-12.7cm (3-5") between the addition of each subsequent layer. This creates a severe restriction when materials of unequal viscosity are used. Depending on the relative viscosities and flow rates of the materials, a flow can be unstable due to the interfacial waves that form at one or more of the interfaces between layers. Such waves are totally unacceptable in a product. For example, a two-layer flow with a lower flow rate of the higher viscosity material is unstable. A three-layer flow, where the middle layer is less viscous than the outer layers, is also unstable, especially when one or both outer layers is relatively thin. This is a severe restriction, since choice of materials and thickness is usually dictated by the desired properties of the finished blow molded article.

Conventional extrusion heads also build a multilayer structure from the inner layer first by feeding the resin layer along the mandrel. This can pose a problem where the inner layer is of a high viscosity material which is distinct from the subsequent layers. This problem limits the configuration, layer thickness, and/or composition of multilayer parisons.

US-A-4182603 discloses a coextrusion die cf. the preamble of claim 1 for extruding multilayer thermoplastic material int he form of a tube. The die is of the type known as a spiral mandrel die wherein the die mandrels are provided with helical grooves on their peripheries. At least one spiral mandrel has helical grooves of opposite hand than those of the remaining mandrels.

The invention aims at achieving one or more of the following objects:

To provide an extrusion head for tubular extrusions which can produce quality parisons, even where the layer structure is unstable.

To provide an extrusion head for tubular extrusions which allows for a greater selection of material, layer thickness, and layer configuration for the extruded parisons.

To improve the circumferential uniformity in the thickness of the wall of the article being extruded.

To provide improved temperature isolation between extrusion modules in a multi-module extrusion head.

To provide an apparatus which allows the inner layer of a multilayer structure to be added last in the sequence so as to provide more versatility in the configuration, layer thickness, and composition of multilayer parisons.

According to the invention there is provided a polymer resin extrusion head for extruding tubular articles according to claim 1. Preferred embodiments are described in the dependent claims.

The invention may include the feature of short multilayer flows in a polymer extrusion head with the use of spiral passages extending from the resin inlet to the annular outlet within the extrusion modules. Preferably, the passage forms a plurality of spiral convolutions and opens to a frustoconical channel.

The invention may also combine the feature of short multilayer flows within a polymer extrusion head with the use of isolated extrusion modules comprised of components which are independent of other modules. This allows for spacing between the modules to enhance temperature isolation.

### Brief Description of the Drawings

Various other objects, features, and attendant advantages of the present invention will be more fully appreciated as the same becomes better understood when considered in conjunction with the accompanying drawings, in which like reference characters designate the same or similar parts throughout the several views and wherein:
Figure 1 is a half-section view of an extrusion head for extruding a multilayer parison.
Figure 2 is a half-section view of another extrusion head for extruding a multilayer parison.
Figure 3 is a half-section view of another extrusion head for extruding a multilayer parison.
Figure 4 is a diagrammatic view of a parison extrusion apparatus including an extrusion head with air spaces between the modules.

### Detailed Description of the Preferred Embodiments

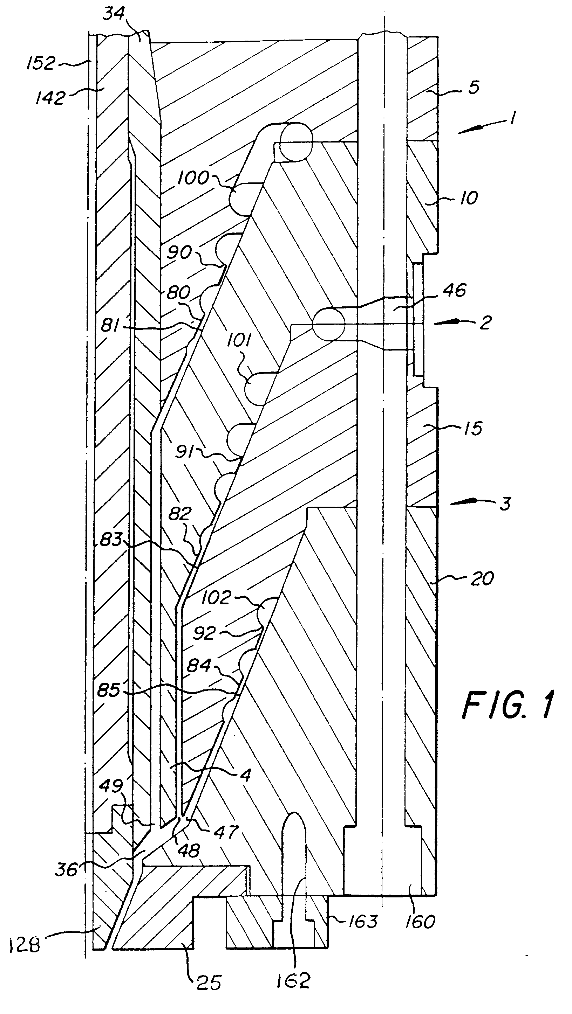

As shown in Figure 1, one embodiment of an extrusion head in accordance with the invention includes a plurality of coaxial extrusion modules, indicated generally at 1, 2, and 3, positioned longitudinally and successively along a mandrel 34 to define an annular channel 36 between inner surfaces of the modules and the mandrel. The channel 36 terminates at an extrusion head outlet 39, from which tubular articles, such as parisons, are extruded.

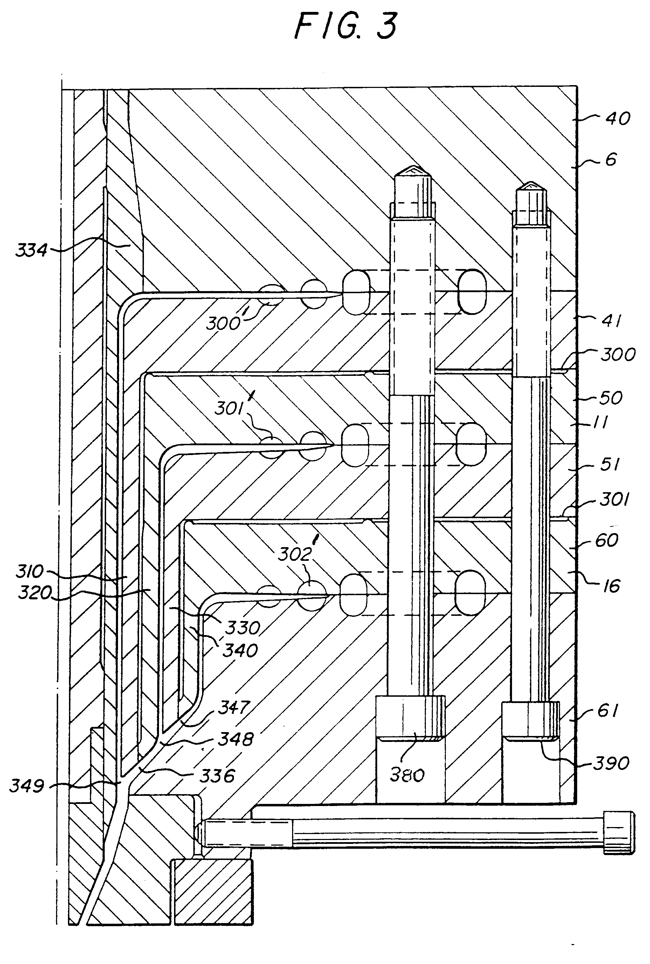

Modules 1, 2, and 3 in Figure 1 are provided by integrated frustoconical sections 5, 10, 15, and 20 which form the components of the modules. It is not necessary to utilize integrated components to form the modules. For example, Figure 3 shows an embodiment of an extrusion head which utilizes independent modules 6, 11, and 16. The modules 6, 11, and 16 include upper sections 40, 50, and 60, respectively, and lower sections 41, 51, and 61, respectively, to form the modules. These combined upper and lower sections define only one module.

Referring again to Figure 1, a resin inlet 46 for module 2 is shown on the periphery of mated sections 10 and 15. Each module contains a resin inlet. The inlets for modules 1 and 3 are positioned at other locations on the extrusion head and are not shown. The resin inlet 46 is formed by machining the mated surfaces of sections 10 and 15.

Modules 1, 2, and 3 each have an annular outlet 47, 48, and 49, respectively, and a passage 100, 101, and 102, respectively, which extends from the resin inlet to the annular outlet for each module. The passages 100, 101, and 102 are spiral in configuration near the resin inlet 46 and gradually open to a frustoconical shape. Passages 100 and 101 continue to open to an annular shape closer to the annular outlets.

Mating surfaces 80, 81, 82, 83, 84, and 85 of sections 5, 10, 15, and 20 have frustoconical portions, with apexes extending downstream. The upper frustoconical portions of the paired mating surfaces 80 and 81, 82 and 83, 84 and 85 have the same taper so as to fit together in sealing engagement. This closes about one-fourth or 90° of a first convolution of passages 100, 101, and 102. The lower frustoconical portions of the mating surfaces 80 and 81, 82 and 83, and 84 and 85 are tapered differently beyond points 90, 91, and 92 on surfaces 80, 82, and 84, respectively. This allows the passages to gradually open to an annular shape, preferably with gradually increasing thickness, so that the passages 100, 101 and 102 define annular outlets 47, 48, and 49, respectively.

The spiral portion of passages 100, 101, and 102 are formed by machining the outside surfaces 80, 82, and 84 of sections 5, 10, and 15. Preferably, at least two full convolutions of the passages 100, 101, and 102 extend beyond the points 90, 91, and 92.

The annular outlets 47, 48, and 49 extrude tubular resin layers into annular channel 36 at different points downstream so that the resin layers are extruded into the annular channel 36 sequentially which allows sequential combination of the extruded tubular layers into a tubular multilayer structure. Annular outlet 49 is the last annular outlet in the sequence and is positioned in close proximity to the extrusion head outlet 39. Preferably, this is within 10.16cm (4") of the extrusion head outlet 39, most preferably within 2.54cm (1"). This allows a dissimilar resin to be added to the multilayer structure by module 1 since the flow of the unstable combination formed within the extrusion head after addition of the dissimilar resin is minimized. The apparatus of Figure 1 is a preferred configuration for the annular outlets 47, 48, and 49 in that all tubular resin layers are combined to form the tubular multilayer structure within a short distance from the extrusion head outlet 39. The multilayer flow is initiated at outlet 48 and terminates at extrusion head outlet 39. Preferably, all tubular multilayer structures are combined within 10.16cm (4") of the extrusion head outlet, most preferably within 2.54cm (1".).

The configuration of annular outlets shown in Figure 1 is unusual in that the inner layer is the last layer to be combined with the multilayer structure. The multilayer structure is initiated away from the mandrel, and the resin layer, which flows along the mandrel, is added as the last layer. This occurs because an annular ring 4 on section 10 isolates the resin fed along the mandrel 34 from the resins in passages 101 and 102, allowing them to initiate the multilayer structure.

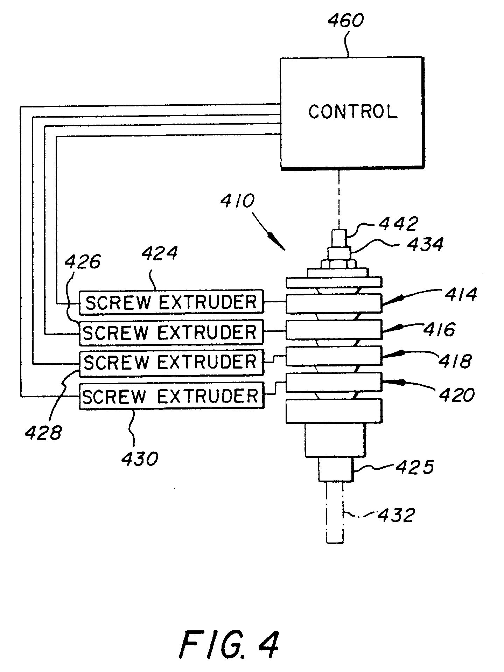

Sections 5, 10, 15, and 20 are secured together by a bolt (not shown) which extends through bolt hole 160. The mandrel 34 is fastened to sections 5, 10, 15, and 20 by means not shown in Figure 1. In Figure 4, the mandrel is secured by nut 114 at the top of the extrusion head. It should be recognized that the means for securing the modules and the mandrel can vary significantly.

Referring to Figure 1, mandrel 34 is tapered, but this is not required, since the tapered portion does not define the annular channel where the layers are combined to form the multilayer structure. The diameter of the mandrel 34 is selected in accordance with the desired thickness of the layer being extruded along its length.

An internal die portion 25 is mounted by a die clamp 163 and bolts (not shown) within bolt holes 162. An external die portion 128 is threaded into a shaft 142, which slidably extends through the lumen of the mandrel 34. The die portion 25 has its opening tapered or stepped down in diameter to correspond to the taper of the die portion 128 so that the proper wall thickness of the tubular article being extruded is maintained. The configuration of the die, its opening, and the means to secure the die can vary widely.

The wall thickness of the lower portion of the annular channel is preferably less than the upper portion of the annular channel to ensure that the layers of the multilayer structure are firmly bonded together. In preferred embodiments, a central longitudinal bore 152 is formed through the die core 128 and shaft 142 for passing gas into the parison being extruded so as to prevent collapse of the parison.

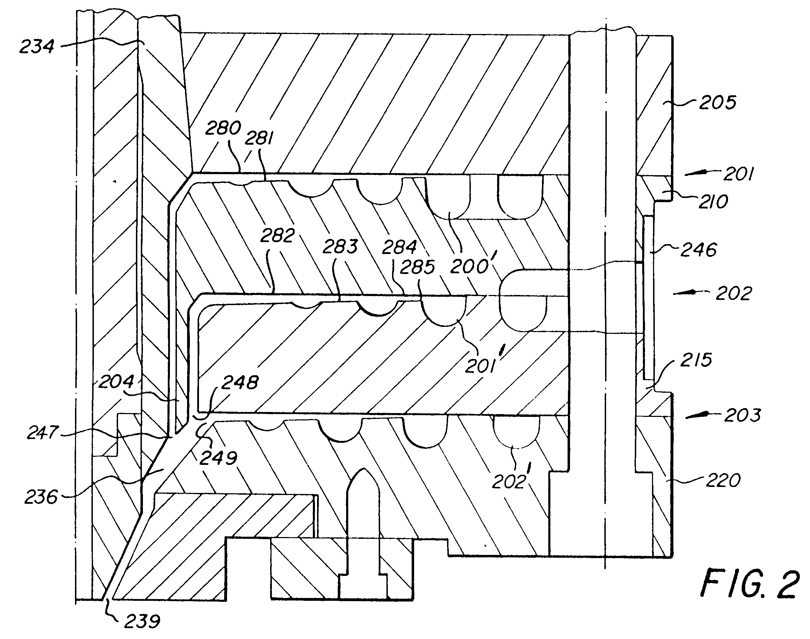

Referring to Figure 2, another embodiment of an extrusion head of this invention is shown wherein a plurality of coaxial extrusion modules, indicated generally at 201, 202, and 203, are positioned longitudinally and successively along mandrel 234 to define an annular channel 236. Modules 201, 202 and 203 are provided by integrated annular sections 205, 210, 215, and 220. Resin inlets 246 and annular outlets 247, 248, and 249 are similar in configuration to the embodiment of Figure 1. Passages 200', 201', and 202' have a distinct configuration from those passages used in the embodiment of Figure 1. Passages 200', 201', and 202' are spiral in configuration near the resin inlet and gradually open to an annular shape close to the annular outlet. The spiral passages of Figure 2 are concentric and on the same plane, unlike the passages shown in the embodiment of Figure 1. The passages need not be spiral in configuration. They can have a conventional cardioid or "coat hanger" shape.

Mating surfaces 280, 281, 282, 283, 248, and 285 of sections 205, 210, 215, and 220 are annular, with the outer periphery of the mating surfaces coming together in sealing arrangement to close a portion of the convolutions of passages 200', 201', and 202'. The inner portion of paired mating surfaces 280 and 281, 282 and 283, and 284 and 285 are of a narrower thickness so as to allow the passages 200', 201' and 202' to gradually open to an annular shape and define annular outlets 247, 248, and 249, respectively.

The annular outlets 247, 248, and 249 extrude tubular resin layers into annular channel 236 at points downstream in a manner similar to the extrusion head of Figure 1 to allow sequential combination of the extruded tubular resin layers into a tubular multilayer structure. Annular outlet 247 is the last outlet in the sequence and is positioned within close proximity to the extrusion head outlet 239, preferably within 10.16cm (4") of the extrusion head outlet and most preferably less than 2.54cm (1").

Annular ring 204 on segment 210 isolates the resin within passage 200 along the mandrel 234 from the resin in passages 201' and 202' and thus both shortens the flow of the multilayer structure it forms within the unit and controls the order of combination so that the inner resin layer is combined with the multilayer structure last.

The remaining components of the extrusion head shown in Figure 2 and similar to the embodiment shown in Figure 1.

Figure 3 is another embodiment of an extrusion head of the present invention wherein a plurality of independent coaxial extrusion modules 6, 11, and 16, are positioned longitudinally and successively along mandrel 334. As discussed above, sections 40 and 41 form module 6, sections 50 and 51 form module 11, and sections 60 and 61 form module 16. The resin inlets are similar in configuration to those of the embodiment shown in Figure 2; however, passages 300', 301' and 302' have a different configuration and annular outlets 347, 348, and 349 are spaced differently in feeding annular channel 336. Both variations occur because modules 6, 11 and 16 are independent with air gaps 300 and 301 in between. The air spaces between the modules allow for temperature differences in the extrusion modules and help prevent degradation of temperature-sensitive resins when used.

Annular rings 310, 320, 330, and 340 on segments 41, 50, 51, and 60, respectively, maintain the resin within passages 300', 301' and 302' separate until they approach the extrusion head outlet 339, preferably at a distance within 4" of the extrusion head outlet 39. These annular rings also allow the layer to be added last to the multilayer structure. The remaining components shown in Figure 3 are substantially identical to those of Figure 2. Bolts 380 and 390 are shown which secure segments 40, 41, 50, 51, 60, and 61.

Figure 4 illustrates a parison extrusion apparatus including a conventional control 460 which controls the vertical position of the shaft 442 in the mandrel 434 of extrusion head 410. Parisons which are extruded are often varied in thickness from the bottom to top, i.e., bottle bottom portions need thicker walls to prevent bulging from the pressure of the bottle contents such as a carbonated beverage. Control 460 can vary the extrusion pressures of the extruders 424, 426, 428, and 430 feeding modules 414, 416, 418 and 420, respectively, to vary the thickness of each layer being extruded relative to the other layers in a conventional manner. For example, the thickness of the barrier layer can be maintained uniformly throughout the bottle height, while the thickness of a structural layer is reduced in upper portions of the bottle. Parison 432 is shown exiting die 425.

An example of parison suitable for blow molding into a bottle has inner and outer layers of polycarbonate, with intermediate layers of amorphous polyamide and regrind.

The described embodiment has several advantages over the prior art extrusion apparatus: The position of the annular outlets limits the flow distance of multilayer structures within the extrusion head, allowing unstable combinations to be formed into a parison for blow molding. For example, polycarbonate resins of a high viscosity can be more easily processed into a parison with low viscosity resins. Minimizing the distance of multilayer flow reduces the opportunity for interfacial waves to form at the interfaces between layers. Still further, advantages of preferred embodiments include the use of spiral passageways with a plurality of convolutions that gradually open to an annular passage. Pressure differentials near the resin inlet are cancelled by pressure differentials in the upper portions of the annular passage with this configuration. This eliminates the need for an annular pressure equalization and distribution chamber, which is generally required in prior art tubular article extrusion apparatus. The embodiments of the present invention provide superior circumferential layer thickness uniformly where these spiral channels are used.

Those embodiments which allow the inner layer of a multilayer structure to be added last provide for greater variation in products in layer configuration, layer thickness, and layer composition. These embodiments provide greater freedom in utilizing a resin of low flow/high viscosity as the inner layer in a multilayer tubular extrusion.

Other preferred embodiments provide the advantage of greater temperature isolation where air spaces are located between adjacent independent annular modules.

While the described embodiment is directed to the manufacture of parisons used for blow molding bottles, the disclosed modular extrusion head is suitable for the manufacture of many other tubular articles such as blown film, which is formed by slitting a tubular form with or without blowing of the tubular form; pipe extrusion or extrusion of other elongated profile articles; wire coatings; glass matt reinforced sheet wherein a polymer is extruded from one or more annular extrusion heads with rectangular center bores onto a glass fiber matt; and pultruded sheet, rod, or profile articles.

Without further elaboration, it is believed that one skilled in the art can, using the preceding description, utilize the present invention to its fullest extent. The above preferred specific embodiments are, therefore, to be construed as merely illustrative and not limitative of the remainder of the disclosure in any way whatsoever.

## Claims

1. A polymer resin extrusion head for extruding tubular articles, comprising:
a longitudinally extending mandrel assembly (24), said mandrel assembly terminating in a bottom portion;
a plurality of coaxial annular extrusion modules (6,11,16) positioned longitudinally and successively along the mandrel assembly so as to define an annular channel between the mandrel assembly and the modules, wherein said annular channel terminates at an extrusion head outlet from which the tubular article is extruded, wherein each annular extrusion module has a resin inlet, an annular outlet for extrusion of a tubular resin layer into the annular channel and a passage from the resin inlet to the annular outlet for receiving and distributing resin; and characterized in that
the annular outlets (47,48,49) are longitudinally and radially spaced apart from each other and longitudinally spaced apart from the extrusion head outlet so as to sequentially combine the extruded resin layers into a tubular multilayer structure within the annular channel and within a longitudinal distance of 10.16 cm (four inches) of the extrusion head outlet, with a last extruded tubular resin layer being added to the tubular multilayer structure within a longitudinal distance of 2.54 cm (one inch) of the extrusion head outlet.

2. An extrusion head as in claim 1, wherein the passages within the annular extrusion modules extend spirally from the resin inlet gradually opening into an annular space which leads to the annular outlet.

3. An extrusion head as in claim 1, wherein the annular outlets are configured so that the last tubular resin layer is the innermost layer of the tubular multilayer structure.

4. An extrusion head as in claim 1, 2 or 3, wherein the annular extrusion modules are each frustoconical in configuration and the respective passages within the annular extrusion modules each extend spirally from a respective resin inlet and gradually opens into an annular space that leads to the annular outlet.

5. An extrusion head as in any of claims 1 to 4, wherein the annular extrusion modules are spaced longitudinally along the mandrel assembly so as to form air spaces between adjacent modules that are sufficient to avoid direct heat transfer between the adjacent modules.

## Patentansprüche

1. Ein Polymerharz-Extruderkopf zum Extrudieren von röhrenförmigen Gegenständen, umfassend:
eine sich in Längsrichtung erstreckende Blasdornanordnung (24), wobei diese Blasdornanordnung in einem Bodenabschnitt endet;
eine Vielzahl coaxialer ringförmiger Extrusionsmodule (6, 11, 16), die entlang der Blasdornanordnung in Längsrichtung und aufeinanderfolgend so positioniert sind, daß sie einen ringförmigen Kanal zwischen der Blasdornanordnung und den Modulen ausbilden, wobei der ringförmige Kanal an einem Extruderkopfauslaß endet, von dem der röhrenförmige Gegenstand extrudiert wird, wobei jeder ringförmige Extrusionsmodul einen Harzeinlaß, einen ringförmigen Auslaß zur Extrusion einer röhrenförmigen Harzschicht in den ringförmigen Kanal und einen Durchgangsweg von dem Harzeinlaß zu dem ringförmigen Auslaß für die Aufnahme und die Verteilung von Harz aufweist;
und der dadurch gekennzeichnet ist, daß die ringförmigen Auslässe (47, 48, 49) in Längsrichtung und in radialer Richtung voneinander beabstandet sind und in Längsrichtung von dem Extruderkopfauslaß so beabstandet sind, daß die extrudierten Harzschichten der Reihe nach aufeinanderfolgend zu einem röhrenförmigen mehrschichtigen Aufbau innerhalb des ringförmigen Kanals und innerhalb eines Abstandes von 10,16 cm (4 Zoll) in Längsrichtung von dem Extruderkopfauslaß kombiniert werden, wobei eine letzte extrudierte röhrenförmige Harzschicht zu dem röhrenförmigen mehrschichtigen Aufbau innerhalb eines Abstandes von 2,54 cm (1 Zoll) von dem Extruderkopfauslaß in Längsrichtung hinzugefügt wird.

2. Ein Extruderkopf nach Anspruch 1, bei dem sich die Durchgangswege innerhalb der ringförmigen Extrusionsmodule spiralförmig von dem Harzeinlaß erstrecken und sich allmählich in einen ringförmigen Raum hinein öffnen, der zu dem ringförmigen Auslaß führt.

3. Ein Extruderkopf nach Anspruch 1, bei dem die ringförmigen Auslässe so aufgebaut sind, daß die letzte röhrenförmige Harzschicht die innerste Schicht des röhrenförmigen mehrschichtigen Aufbaus ist.

4. Ein Extruderkopf nach Anspruch 1, 2 oder 3, bei dem die Konfiguration der ringförmigen Extrusionsmodule jeweils kegelstumpfförmig ist und sich die entsprechenden Durchgangswege innerhalb der ringförmigen Extrusionsmodule jeweils spiralförmig von einem entsprechenden Harzeinlaß erstrecken und sich allmählich in einen ringförmigen Raum öffnen, der zu dem ringförmigen Auslaß führt.

5. Ein Extruderkopf nach einem der Ansprüche 1 bis 4, bei dem die ringförmigen Extrusionsmodule in Längsrichtung entlang der Blasdornanordnung so beabstandet sind, daß sie Lufträume zwischen benachbarten Modulen bilden, die ausreichend sind, um direkte Wärmeübertragung zwischen den benachbarten Modulen zu vermeiden.

## Revendications

1. Tête d'extrusion pour résine polymère destinée à extruder des articles tubulaires, comprenant:
un ensemble formant mandrin (24) s'étendant dans le sens longitudinal, ledit ensemble formant mandrin se terminant par une partie inférieure;
une pluralité de modules d'extrusion annulaires coaxiaux (6, 11, 16) positionnés dans le sens longitudinal et successivement le long de l'ensemble formant mandrin de manière à définir un canal annulaire entre l'ensemble formant mandrin et les modules, ledit canal annulaire se terminant au niveau d'une sortie de tête d'extrusion à partir de laquelle l'article tubulaire est extrudé, chaque module d'extrusion annulaire comportant une entrée de résine, une sortie annulaire pour l'extrusion d'une couche tubulaire de résine jusque dans le canal annulaire et un passage allant de l'entrée de résine jusqu'à la sortie annulaire pour recevoir et distribuer la résine; et caractérisé en ce que:
les sorties annulaires (47, 48, 49) sont epacées, dans le sens longitudinal et dans le sens radial, les unes des autres et sont espacées, dans le sens longitudinal, de la sortie de tête d'extrusion de manière à combiner séquentiellement les couches de résine extrudées en formant une structure tubulaire multicouche à l'intérieur du canal annulaire et dans les limites d'une distance longitudinale de 10,16 cm (quatre pouces) de la sortie de la tête d'extrusion, une dernière couche de résine, tubulaire et extrudée, étant ajoutée à la structure tubulaire multicouche dans les limites d'une distance longitudinale de 2,54 cm (un pouce) de la sortie de tête d'extrusion.

2. Tête d'extrusion selon la revendication 1, dans laquelle les passages situés dans les modules d'extrusion annulaires s'étendent en hélice depuis l'entrée de résine en débouchant progressivement dans un espace annulaire qui conduit à la sortie annulaire.

3. Tête d'extrusion selon la revendication 1, dans laquelle les sorties annulaires sont configurées de manière que la dernière couche tubulaire de résine soit la couche située la plus à l'intérieur de la structure tubulaire multicouche.

4. Tête d'extrusion selon la revendication 1, 2 ou 3, dans laquelle les modules d'extrusion annulaires ont chacun une configuration tronconique et les passages respectifs à l'intérieur des modules d'extrusion annulaires s'étendent chacun en hélice depuis une entrée respective de résine et débouche progressivement dans un espace annulaire qui conduit jusqu'à la sortie annulaire.

5. Tête d'extrusion selon l'une quelconque des revendications 1 à 4 , dans laquelle les modules d'extrusion annulaires sont espacés, dans le sens longidudinal, le long de l'ensemble formant mandrin, de manière à former entre des modules adjacents des espaces d'air qui sont suffisants pour éviter un transfert direct entre les modules adjacents.
